# EUROPEAN PATENT SPECIFICATION

(11) **EP 2 687 482 B1**
(45) Date of publication and mention of the grant of the patent: **09.05.2018**
(21) Application number: 12757217.0
(22) Date of filing: 16.03.2012
(51) Int. Cl.: C01B 25/45, H01M 4/58, H01M 4/583, H01M 4/587, H01M 4/36, H01M 4/62

(54) **CATHODE MATERIAL HAVING DOUBLE-LAYER CARBON COATING AND PREPARATION METHOD THEREFOR**
KATHODENMATERIAL MIT DOPPELSCHICHTIGER KOHLENSTOFFBESCHICHTUNG UND HERSTELLUNGSVERFAHREN DAFÜR
MATÉRIAU DE CATHODE AYANT UN REVÊTEMENT CARBONÉ DOUBLE COUCHE ET SON PROCÉDÉ DE PRÉPARATION

(30) Priority: 16.03.2011 US 201161453298 P
(43) Date of publication of application: 22.01.2014
(73) Proprietor: Advanced Lithium Electrochemistry Co., Ltd., Taoyuan City Taoyuan County, 330 (TW)
(72) Inventor: CHANG, Shengshih, Taoyuan, Taoyuan County 330 (TW); HSIEH, Hanwei, Taoyuan, Taoyuan Couny 330 (TW); LIN, Yuankai, Taoyuan, Taoyuan County 330 (TW)
(74) Representative: 2K Patentanwälte Blasberg Kewitz & Reichel
(86) International application number: PCT/CN2012/072472
(87) International publication number: WO 2012/122951

(56) References cited:
- WO-A1-2010/109869
- WO-A1-2010/130684
- CN-A- 101 320 809
- JP-A- 2006 302 671
- SUNG WOO OH ET AL: "Double Carbon Coating of LiFePO4 as High Rate Electrode for Rechargeable Lithium Batteries", ADVANCED MATERIALS, vol. 22, no. 43, 20 July 2010 (2010-07-20) , pages 4842-4845, XP055127346, ISSN: 0935-9648, DOI: 10.1002/adma.200904027
- CATHERINE A. PETERS ET AL: "Coal tar dissolution in water-miscible solvents: experimental evaluation", ENVIRONMENTAL SCIENCE & TECHNOLOGY, vol. 27, no. 13, 1 October 1993 (1993-10-01), pages 2831-2843, XP055127594, ISSN: 0013-936X, DOI: 10.1021/es00049a025
- By Sung ET AL: "Submitted to Supporting Information Double carbon coating of LiFePO 4 as high rate electrode for rechargeable lithium batteries**", Advanced Materials, 16 November 2010 (2010-11-16), pages 4824-4845, XP055127383, Retrieved from the Internet: URL:http://onlinelibrary.wiley.com/store/1 0.1002/adma.200904027/asset/supinfo/adma_2 00904027_sm_suppl.pdf?v=1&s=31c1d1e44a290c 3b3b58a5f3ea3b29d9b002365e [retrieved on 2014-07-08]
- XUELIN YANG ET AL: "Enhanced rate performance of two-phase carbon coated LiFePO4/(C+G) using natural graphite as carbon source", JOURNAL OF POWER SOURCES, vol. 204, 24 December 2011 (2011-12-24), pages 182-186, XP055127360, ISSN: 0378-7753, DOI: 10.1016/j.jpowsour.2011.12.032
- Menéndez ET AL: "Fibers and Composites" In: "Fibers and Composites", 1 January 2003 (2003-01-01), Taylor and Francis, 11 New Fetter Lane, London EC4P 4EE, XP055192889, ISBN: 978-0-41-530826-7 pages 147-148,

## Description

### FIELD OF THE INVENTION

The present invention relates to a cathode material, and more particularly to a cathode material with double carbon coatings.

### BACKGROUND OF THE INVENTION

With the diversified development of electronic products, the demands on portable energy sources are gradually increased. For example, consumer electronic devices, medical instruments, electric bicycles, electric vehicles or electric hand tools use portable power sources as sources of electric power. Among these portable power sources, rechargeable batteries (also referred as secondary cells) are widely used because the electrochemical reactions thereof are electrically reversible. Moreover, among the conventional secondary cells, lithium-ion secondary cells have high volumetric capacitance, low pollution, good charge and discharge cycle characteristics, and no memory effect. Consequently, the lithium-ion secondary cells are more potential for development.

As known, the performance of the secondary cell is influenced by many factors. Generally, the material for producing a positive electrode (also referred as a cathode) is more critical to the performance of the secondary cell. Because of good electrochemical characteristics, low environmental pollution, better security, abundant raw material sources, high specific capacity, good cycle performance, good thermal stability and high charge/discharge efficiency, the lithium iron phosphate-based compound having an olivine structure or a NASICON structure is considered to be the potential lithium-ion battery cathode material.

On the other hand, with increasing environmental awareness, electric vehicle technologies have received considerable attention in recent years. Generally, electric vehicles use rechargeable batteries (i.e. secondary cells) as the power sources. The economic benefits of the secondary cells not only depend on the electrical properties but also depend on the cycle life.
SUNG WOO OH ET AL: "Double Carbon Coating of LiFe PO4 as High Rate Electorde for Rechargeable Lithium Batteries" ADVANCED MATERIALS vol 22 no 43, ISSN:0935-9648 DOI: 10.1002/adama.200904028 discloses a double-carbon-coated LiFePO4 material and the preparation thereof, wherein the carbon source of first carbon coating is sucrose and the carbon source of second carbon coating is pitch.
CATHERINE A. PETERS ETAL: "Coal tar dissolution in water-miscible solvents: experimental evaluation" ENVIRONMENTAL SCIENCE & TECHNOLOGY, vol 27, no. 13 ISSN: 0013-936X DOI: 10.1021/es0049a025, discusses coal tar dissolution in water-miscible solvents.
By Sung ET AL:"Submitted to Supporting Information Double carbon coating of LIFePO 4 as high rate electrode for reachargeable lithium batteries" Advanced Materials , 15 November 2010, pages 4824-4845.
XUELIN YANG ET AL: "Enhanced rate performance of two-phase carbon coated LiFePO4/(C+G) using natural graphite as carbon source ", JOURNAL IF POWER SOURCES, vol. 204, 1 April 2012, pages 182-186 ISSN 0378-7753 DOI

Therefore, there is a need of providing a cathode material of a secondary cell with enhanced cycle life.

### SUMMARY OF THE INVENTION

The present invention provides a cathode material with double carbon coatings. By combining two types of carbon layers together to increase the adhesion of carbon on the lithium metal phosphate matrix, the problem of causing reduction of the material performance during the charging and discharging process will be avoided. Due to the double carbon coatings, the overall structural strength of the cathode material is enhanced, the influence on the structural flexibility during the charging and discharging process is reduced, and the structural damage caused by the acidic substance of the electrolyte is reduced. As a consequence, the use life of the cathode material is prolonged.

In accordance with an aspect of the present invention, there is provided a cathode material with double carbon coatings. The cathode material includes a lithium metal phosphate matrix, a first carbon coating, and a second carbon coating. The first carbon coating is coated on the lithium metal phosphate matrix. The second carbon coating is coated on the first carbon coating. A carbon source of the first carbon coating is a carbohydrate or a water-soluble macromolecule compound having relatively smaller molecular weight. A carbon source of the second carbon coating is a macromolecule compound having relatively higher molecular weight.

In accordance with another aspect of the present invention, there is provided a process of manufacturing a cathode material with double carbon coatings. Firstly, a lithium metal phosphate matrix and a carbon source of a first carbon coating are provided, and the mixture of the lithium metal phosphate matrix and the carbon source of the first carbon coating are thermally treated by sintering. Consequently, a cathode material with a single carbon coating is obtained. Meanwhile, the first carbon coating is coated on the lithium metal phosphate matrix. Then, a carbon source of a second carbon coating is added to the cathode material with the single carbon coating, and the mixture of the carbon source of the second carbon coating and the cathode material with the single carbon coating are thermally treated by sintering. Consequently, the cathode material with the double carbon coatings is obtained. The carbon source of the first carbon coating is a carbohydrate or a water-soluble macromolecule compound having relatively smaller molecular weight. The carbon source of the second carbon coating is a macromolecule compound having relatively higher molecular weight.

The above contents of the present invention will become more readily apparent to those ordinarily skilled in the art after reviewing the following detailed description and accompanying drawings, in which:

### BRIEF DESCRIPTION OF THE DRAWINGS

FIG. 1 is a schematic view illustrating a cathode material with double carbon coatings according to an embodiment of the present invention;
FIG. 2 schematically illustrates the X-ray absorption spectra of the powders obtained in Example 1 and Example 2;
FIG. 3 schematically illustrates the SEM photographs of the powders obtained in Example 1 and Example 2;
FIG. 4 schematically illustrates the capacity of the coin-type cells produced from the powders of Example 1 and Example 2 at a charge rate of 1C and a discharge rate of 3C;
FIG. 5 schematically illustrates the life cycle retention of the coin-type cells produced from the powders of Example 1 and Example 2 at a charge rate of 1C and a discharge rate of 3C;
FIG. 6 schematically illustrates the capacity of the coin-type cells produced from the powders of Example 3 and Example 4 at a charge rate of 1C and a discharge rate of 3C;
FIG. 7 schematically illustrates the life cycle retention of the coin-type cells produced from the powders of Example 3 and Example 4 at a charge rate of 1C and a discharge rate of 3C;
FIGS. 8A and 8B schematically illustrate the SEM photographs of the powders obtained in Example 2 and Example 3 in different sintering conditions;
FIG. 9 schematically illustrates the capacity of the coin-type cells produced from the powder of Example 5 at a charge rate of 1C and a discharge rate of 3C;
FIG. 10 schematically illustrates the capacity of the coin-type cells produced from the powder of Example 6 at a charge rate of 1C and a discharge rate of 3C;
FIG. 11 schematically illustrates the X-ray absorption spectra of the powders obtained in Example 2, Example 5 and Example 6; and
FIG. 12 schematically illustrates the capacity of the coin-type cells produced from the powder of Example 7 at a charge rate of 1C and a discharge rate of 3C.

### DETAILED DESCRIPTION OF THE PREFERRED EMBODIMENT

The present invention will now be described more specifically with reference to the following embodiments. It is to be noted that the following descriptions of preferred embodiments of this invention are presented herein for purpose of illustration and description only. It is not intended to be exhaustive or to be limited to the precise form disclosed.

The present invention provides a cathode material with double carbon coatings. The cathode material comprises a lithium metal phosphate matrix and two carbon coatings coated on the lithium metal phosphate matrix. Due to the double carbon coatings, the overall structural strength of the cathode material is enhanced, the influence on the structural flexibility during the charging and discharging process is reduced, and the structural damage caused by the acidic substance of the electrolyte is reduced. As a consequence, the use life of the cathode material is prolonged.

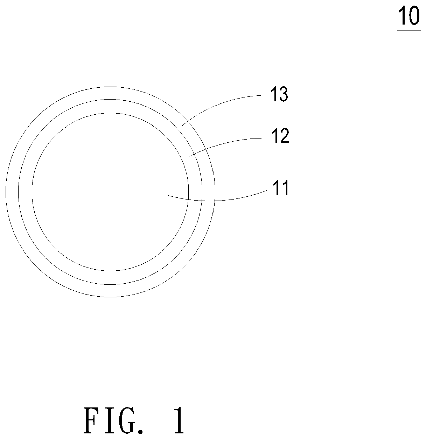

In accordance with the present invention, the cathode material with double carbon coatings is produced by firstly providing a cathode material with a single carbon coating and then another carbon coating is coated thereon. FIG. 1 is a schematic view illustrating a cathode material with double carbon coatings according to an embodiment of the present invention. As shown in FIG. 1, the cathode material 10 of the present invention mainly comprises a lithium metal phosphate matrix 11, a first carbon coating 12, and a second carbon coating 13. The first carbon coating 12 is coated on the lithium metal phosphate matrix 11. The metal element of the lithium metal phosphate matrix 11 is for example iron, cobalt, nickel, manganese or copper, but is not limited thereto. In this embodiment, the lithium metal phosphate matrix 11 is illustrated by referring to a lithium iron phosphate (LiFePO₄) material. The example of the lithium metal phosphate matrix 11 is not limited to lithium iron phosphate.

The raw materials for synthesizing the lithium iron phosphate material comprise iron powder or iron-containing compound, phosphoric acid or phosphate compound, and lithium carbonate or lithium hydroxide. After the above materials and the carbon source of the first carbon coating are subject to a dry processing reaction or a wet processing reaction, the mixture is spray-dried and granulated to form a carbon-containing lithium iron phosphate precursor. Under a protective atmosphere such as nitrogen or argon gas, the precursor is thermally treated by sintering. Consequently, a cathode material with a single carbon coating is produced. The carbon source of the first carbon coating is a carbohydrate or a water-soluble macromolecule compound having relatively smaller molecular weight. The carbohydrate having relatively smaller molecular weight is a monosaccharide, a disaccharide or a polysaccharide. The water-soluble macromolecule compound polyvinyl alcohol (PVA) or polyvinylpyrrolidone (PVP).

Then, a second carbon coating formation process is performed. The carbon source of the second carbon coating is a macromolecule compound having relatively higher molecular weight. The carbon source of the second carbon coating is coal tar pitch or petroleum pitch. The carbon source of the second carbon coating is dissolved in an organic solvent. Then, the cathode material with a single carbon coating is added and uniformly mixed. Under a protective atmosphere such as nitrogen or argon gas, the mixture is thermally treated by sintering. Consequently, a cathode material with double carbon coatings is produced.

The preparation process and efficacy of the cathode material with double carbon coatings will be illustrated in the following examples.

### Example 1:

Phosphoric acid (85%, 2 moles) was dissolved in deionized water (600 ml) to form an acidic solution. Then, iron powder (≥99%, 2 moles) was added to the acidic solution. After reaction, a product containing iron and phosphorous is formed. This solution was continuously stirred for 24 hours to provide complete dispersion. Triton X-100 (10 ml), a non-ionic surfactant, was then added to the dispersed solution. Lithium hydroxide monohydrate (1 mole) was added to the resulting solution while it was thoroughly stirred. Lithium carbonate (1 mole) was then added. Consequently, a precursor containing iron, phosphorous and lithium at a molar ratio of 1:1:1 was produced. The precursor was analyzed and identified by inductively coupled plasma atomic emission spectrometry (ICP/AES).

Then, vanadium pentoxide (0.04 mole, V₂O₅) and fructose (0.07 mole) were added to the resulting precursor. A wet dispersion process was performed to form a semicrystalline nanoscale particle mixture in solution. The mixture was spray-dried to form a powdery precursor. Then, the powdery precursor was placed in an aluminum oxide crucible. Under a protective atmosphere such as nitrogen or argon gas, the powdery precursor was sintered at high temperature up to 800°C and maintained at this temperature for at least five hours. Under this circumstance, a cathode material covered with a single carbon coating (also referred as an "M product powder") was produced. The content of carbon in the M product powder was 1∼1.5%.

### Example 2:

The cathode material covered with the single carbon coating (i.e. the M product powder), which was prepared in Example 1, was further subject to a second carbon coating formation process. Firstly, several coal tar pitch solutions (0.4∼1%) were prepared. These coal tar pitch solutions were obtained by dissolving different amounts of coal tar pitch (0.4g, 0.6g, 0.8g and 1g) into different amounts of xylene (99.6g, 99.4 g, 99.2 g and 99 g). After the coal tar pitch was completely dissolved, 20g of the M product powder was added and uniformly mixed. The obtained mixture solution was subject to a suction vacuum treatment in order to remove air from pores of the powder. The mixture solution was then stirred by a homogenizer and mixed by a ball mill jar. Consequently, the coal tar pitch was coated on the surface of the M product powder more uniformly. The mixture was heated to 150°C to remove xylene. Consequently, a uniform mixture, i.e. coal tar pitch coated on the M product powder, was produced. Then, the mixture was sintered in a furnace under a nitrogen or argon atmosphere. The furnace was raised to 550°C at a ramp rate of 5°C/min and maintained at 550°C for 4 hours, then raised to 750°C and maintained at 750°C for 4 hours, and finally reduced to room temperature. Consequently, a cathode material with double carbon coatings was produced.

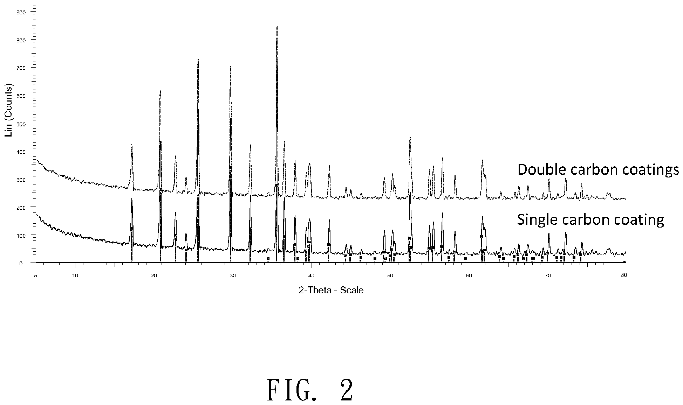

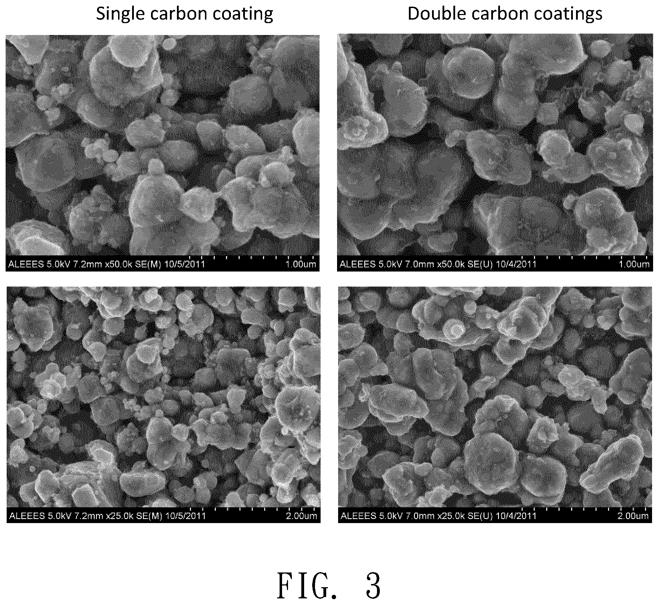

The powders obtained in Example 1 and Example 2 were analyzed by an X-ray diffractometer (XRD) and observed by a scanning electron microscope (SEM). The XRD result and the SEM photograph are shown in FIG. 2 and FIG. 3, respectively. In FIG. 2, the upper curve indicates the XRD result of a cathode material with double carbon coatings (for example coated with 0.6% coal tar pitch and obtained in Example 2), and the lower curve indicates the XRD result of a cathode material with a single carbon coating (for example obtained in Example 1). The XRD result demonstrates that the peak values of the cathode material with the double carbon coatings have no obvious noise when compared with the cathode material with the single carbon coating. Consequently, after the second carbon coating formation process and the thermal treatment, the original olivine crystalline structure of the lithium iron phosphate-based compound is not changed. That is, the stability of the crystalline phase is not influenced. In FIG. 3, two SEM photographs of the cathode material with the single carbon coating are shown in the left side of the drawing, and two SEM photographs of the cathode material with the double carbon coatings are shown in the right side of the drawing. It is found that the cathode material with the double carbon coatings has the thicker carbon coating. Moreover, since two carbon coating formation processes have been performed, the cathode material with the double coatings has a smoother surface and less small-sized particles. Moreover, since the pores between particles of the cathode material with the double coatings are reduced, the particles are subject to aggregation.

The powders obtained in Example 1 and Example 2 were coated on aluminum substrates in order to form a cathode element and assemble coin-type cells. The electric properties of the coin-type cells were tested. The test results are listed in Table 1. As shown in Table 1, the capacity of the cathode material with the double carbon coatings is slightly reduced. It is inferred that the thicker carbon coatings may hinder passage of ions. On the other hand, the double carbon coatings may smooth the surfaces of the particles and reduce the specific surface area (S.A.). Moreover, the ratio of the carbon percentage of the first carbon coating to the carbon percentage of the second carbon coating is in the range between 1:1 and 1:2.

**Table 1:**

| (mAh/g) | Single carbon coating | Double carbon coatings | | |
|---|---|---|---|---|
| | | 0.4% coal tar pitch | 0.6% coal tar pitch | 1 % coal tar pitch |
| 0.1C C/D | 151 | 141 | 156 | 151 |
| | 155 | 126 | 137 | 128 |
| | 153 | 129 | 142 | 133 |
| | 153 | 130 | 142 | 136 |
| 1C C/2C D | | 130 | 143 | 138 |
| | | 83 | 95 | 88 |
| | | 83 | 95 | 90 |
| | | 83 | 95 | 87 |
| C% | 1.18% | 2.539% (1.179%)* | 2.734% (1.554%)* | 3.290% (2.11%)* |
| S.A. | 10.9 | 6.72 | 6.23 | 6.3 |

| | | | | |
|---|---|---|---|---|
| * the value in the parenthesis indicates the carbon percentage of the second carbon coating | | | | |

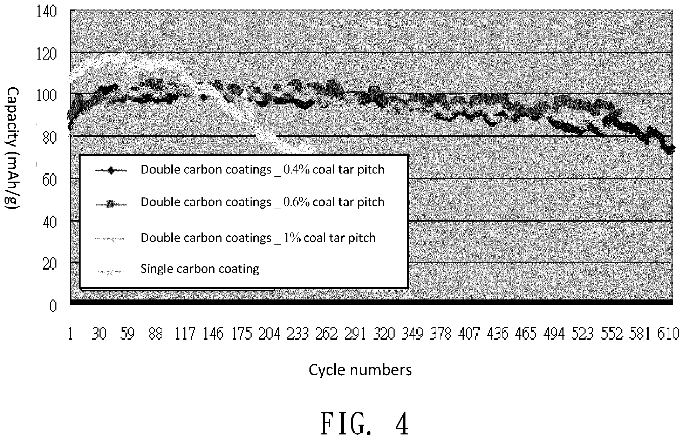

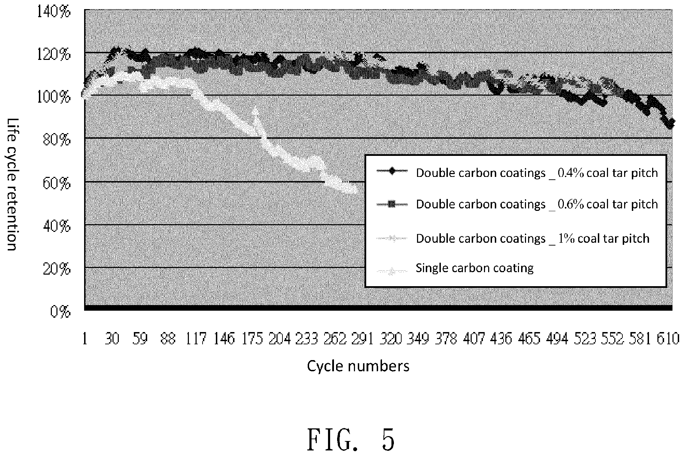

FIG. 4 schematically illustrates the capacity of the coin-type cells produced from the powders of Example 1 and Example 2 at a charge rate of 1C and a discharge rate of 3C. FIG. 5 schematically illustrates the life cycle retention of the coin-type cells produced from the powders of Example 1 and Example 2 at a charge rate of 1C and a discharge rate of 3C. As shown in FIG. 4, the initial capacity of the cathode material with the single carbon coating is higher than the cathode material with the double carbon coatings. However, after about the 150-th charge/discharge cycle, the capacity of the cathode material with the single carbon coating abruptly reduces. On the other hand, after about the 500-th charge/discharge cycle, the capacity of the cathode material with the double carbon coatings is substantially equal to the initial capacity. Similarly, as shown in FIG. 5, after about the 500-th charge/discharge cycle, the cathode material with the double carbon coatings still has 100% of life cycle retention. Consequently, the cell produced from the cathode material with the double carbon coatings has obviously longer cycle life. Moreover, in case that the 80% of life cycle retention reaches, the cycle life of the cell produced from the cathode material with the double carbon coatings has been increased at least three times when compared with the cathode material with the single carbon coating.

### Example 3:

Iron phosphate hydrate (2 mole) was added to pure water (600 ml). Polyvinylpyrrolidone (PVP K30, 10 ml) was added to a dispersed solution. While stirring, a wet dispersion process (e.g. a ball mill process or an ultrasonic dispersion process) was performed to form a nanoscale particle mixture in solution. Lithium hydroxide monohydrate (2 mole) and fructose (0.07 mole) were added. After the solution was uniformly stirred, the solution was spray-dried to form a powdery precursor.

Then, the powdery precursor was placed in an aluminum oxide crucible. Under a protective atmosphere such as nitrogen or argon gas, the powdery precursor was sintered at high temperature up to 800°C and maintained at this temperature for at least five hours. Consequently, the carbon coating was subject to excellent carbonation. Under this circumstance, a cathode material covered with a single carbon coating (also referred as an "A product powder") was produced. The content of carbon in the A product powder was 2∼2.5%.

### Example 4:

The cathode material covered with the single carbon coating (i.e. the A product powder), which was prepared in Example 3, was further subject to a second carbon coating formation process. Firstly, several coal tar pitch solutions (0.6∼1%) were prepared. These coal tar pitch solutions were obtained by dissolving different amount of coal tar pitch (0.6g, 0.8g and 1g) into different amount of xylene (99.4 g, 99.2 g and 99 g). After the coal tar pitch was completely dissolved, 20g of the A product powder was added and uniformly mixed. The subsequent procedures are identical to those of Example 2, and are not redundantly described herein.

The physical data of the powders obtained in Example 3 and Example 4 are shown in Table 2 as follows. As shown in Table 2, the double carbon coatings may reduce the specific surface area. Moreover, the ratio of the carbon percentage of the first carbon coating to the carbon percentage of the second carbon coating is in the range between 4:3 and 1:1.

**Table 2:**

| (mAh/g) | Single carbon coating | Double carbon coatings | | |
|---|---|---|---|---|
| | | 0.6% coal tar pitch | 0.8% coal tar pitch | 1 % coal tar pitch |
| C% | 2.283% | 4.028% (1.745%)* : | 4.465% (2.182%)* | 4.565% (2.282%)* |
| S.A. | 18.9 | 14.66 | 14.04 | 12.83 |

| | | | | |
|---|---|---|---|---|
| * the value in the parenthesis indicates the carbon percentage of the second carbon coating | | | | |

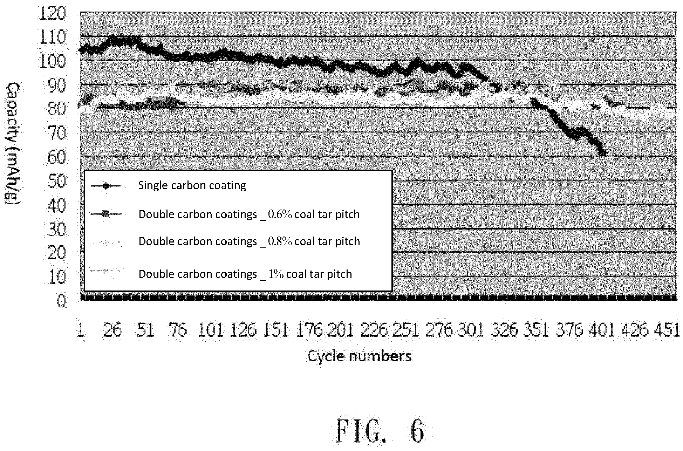

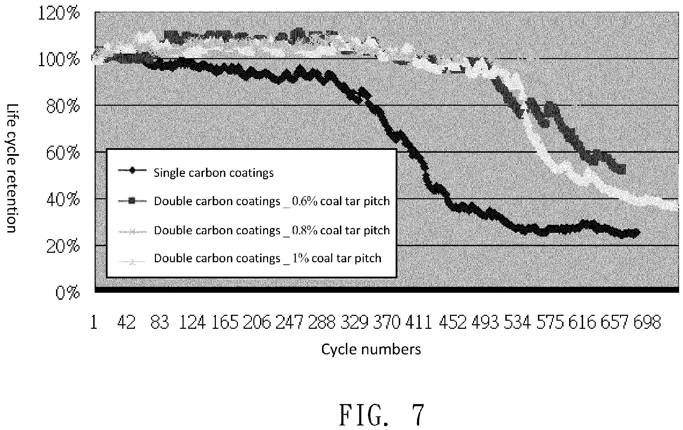

FIG. 6 schematically illustrates the capacity of the coin-type cells produced from the powders of Example 3 and Example 4 at a charge rate of 1C and a discharge rate of 3C. FIG. 7 schematically illustrates the life cycle retention of the coin-type cells produced from the powders of Example 3 and Example 4 at a charge rate of 1C and a discharge rate of 3C. As shown in FIG. 6, the initial capacity of the cathode material with the single carbon coating is higher than the cathode material with the double carbon coatings. However, after about the 300-th charge/discharge cycle, the capacity of the cathode material with the single carbon coating abruptly reduces. On the other hand, after about the 450-th charge/discharge cycle, the capacity of the cathode material with the double carbon coatings is substantially equal to the initial capacity. Similarly, as shown in FIG 7, after about the 500-the charge/discharge cycle, the cathode material with the double carbon coatings still has 100% of life cycle retention. Consequently, the cell produced from the cathode material with the double carbon coatings has obviously longer cycle life. Moreover, in case that the 80% of life cycle retention reaches, the cycle life of the cell produced from the cathode material with the double carbon coatings has been increased at least 1.5 times when compared with the cycle life of the cathode material with the single carbon coating.

### Example 5:

The cathode material covered with the single carbon coating (i.e. the M product powder), which was prepared in Example 1, was further subjected to a second carbon coating formation process. The subsequent sintering conditions of this example were different from those of Example 2. In Example 2, the sintering procedure was performed by maintaining at 550°C for 4 hours and then maintaining at 750°C for 4 hours. In Example 5, the sintering procedure was performed by maintaining at 260°C for 2 hours and then maintaining at 900°C for 2 hours.

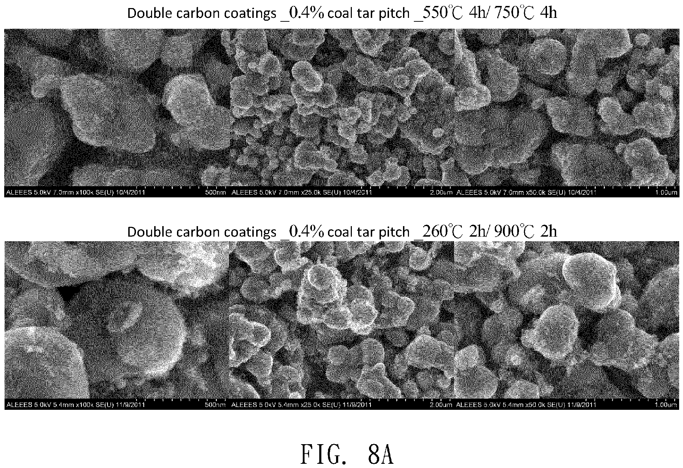

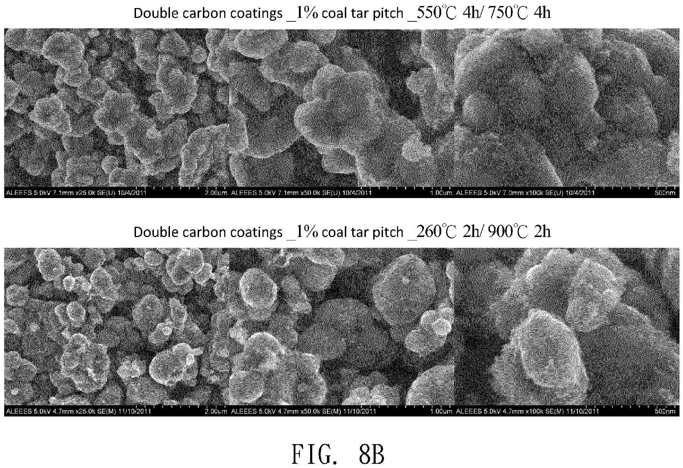

FIGS. 8A and 8B schematically illustrate the SEM photographs of the powders obtained in Example 2 and Example 3 in different sintering conditions. As shown in FIGS. 8A and 8B, the powder obtained by the higher-temperature thermal treatment of Example 5 has more carbon crumbs and raw edges. Consequently, the contact area between the cathode material and the electrolyte increases, and the capacity is enhanced.

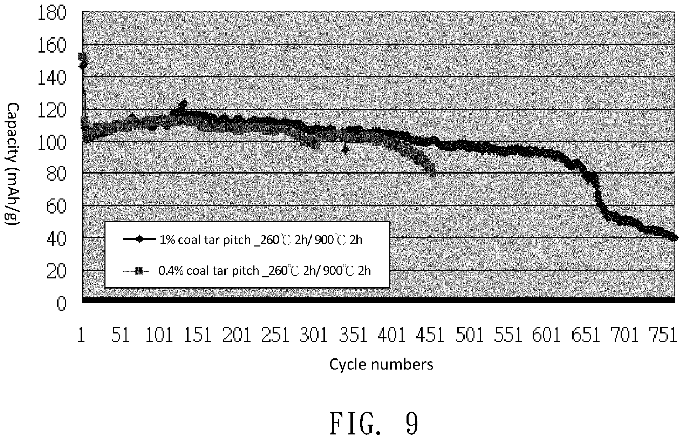

FIG. 9 schematically illustrates the capacity of the coin-type cells produced from the powder of Example 5 at a charge rate of 1C and a discharge rate of 3C. In case that the capacity as shown in FIG. 9 is converted into the life cycle retention, the powder produced by the sintering procedure of Example 5 (i.e. maintaining at 260°C for 2 hours and then maintaining at 900°C for 2 hours) may allow the cell to have a cycle life of 450 charge/discharge cycles (> 80% of life cycle retention). Moreover, in case that carbon source of the second carbon coating is 1% coal tar pitch, the cell has a cycle life of up to 650 charge/discharge cycles (> 80% of life cycle retention).

### Example 6:

The cathode material covered with the single carbon coating (i.e. the M product powder), which was prepared in Example 1, was further subjected to a second carbon coating formation process. The subsequent sintering conditions of this example were different from those of Example 2. In Example 2, the sintering procedure was performed by maintaining at 550°C for 4 hours and then maintaining at 750°C for 4 hours. In Example 6, the sintering procedure was performed by maintaining at 550°C for 4 hours and then maintaining at 650°C for 4 hours.

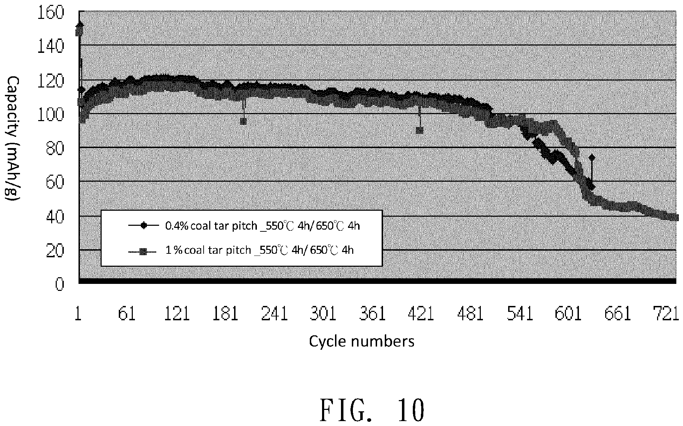

FIG. 10 schematically illustrates the capacity of the coin-type cells produced from the powder of Example 6 at a charge rate of 1C and a discharge rate of 3C. In case that the capacity as shown in FIG. 10 is converted into the life cycle retention, the powder produced by the sintering procedure of Example 6 (i.e. maintaining at 550°C for 4 hours and then maintaining at 650°C for 4 hours) may allow the cell to have a cycle life of up to 500 charge/discharge cycles at 100% of life cycle retention.

The comparisons between the physical properties and electrical properties of the powders obtained in Example 1, Example 2, Example 5 and Example 6 are shown in Table 3. As shown in Table 3, the sintering conditions of Example 5 and Example 6 can increase the specified surface area of the powder and effectively avoid reduction of the capacity when compared with the sintering condition of Example 2 (i.e. maintaining at 550°C for 4 hours and then maintaining at 750°C for 4 hours). The obtained capacity (0.1C:147∼153/2C:106∼114) is close to the M product powder with the single carbon coating (0.1C:155/2C:114).

**Table 3:**

| | C% | S.A. | 0.1CD | 0.1CD | 2CD | 2CD | 3CD | 3CD | Maximum capacity |
|---|---|---|---|---|---|---|---|---|---|
| Single carbon coating | 1.18% | 10.9 | 155 | 153 | 113 | 114 | 108 | 109 | 118 |
| Double carbon coating_ 0.4% coal tar pitch 550°C 4h/750°C 4h | 2.539% (1.179%)* | 6.72 | 131 | 135 | 94 | 94 | 94 | 85 | 86 |
| Double carbon coating_ 1% coal tar pitch 550°C 4h/750°C 4h | 3.29% (2.11%)* | 6.3 | 136 | 140 | 92 | 92 | 81 | 82 | 103 |
| Double carbon coating_ 0.4% coal tar pitch 260°C 2h/ 900°C 2h | 1.797% (0.617%)* | 7.56 | 153 | 151 | 113 | 111 | 101 | 102 | 113 |
| Double carbon coating_ 1 % coal tar pitch | 2.963% | 6.96 | 149 | 147 | 108 | 110 | 100 | 101 | 123 |
| 260°C 2h/900°C 2h | (1.783%)* | | | | | | | | |
| Double carbon coating_ 0.4% coal tar pitch 550°C 4h/650°C 4h | 2.33% (1.15%)* | 7.06 | 151 | 152 | 113 | 114 | 104 | 105 | 120 |
| Double carbon coating_ 1% coal tar pitch 550°C 4h/650°C 4h | 3.260% (2.08%)* | 8.1 | 147 | 149 | 106 | 107 | 96 | 98 | 115 |

| | | | | | | | | | |
|---|---|---|---|---|---|---|---|---|---|
| * the value in the parenthesis indicates the carbon percentage of the second carbon coating | | | | | | | | | |

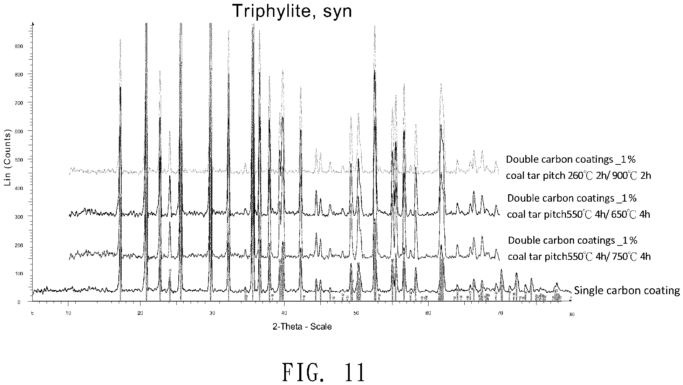

FIG. 11 schematically illustrates the X-ray absorption spectra of the powders obtained at various sintering conditions in Example 1, Example 2, Example 6 and Example 5. The XRD result as shown in FIG. 11 demonstrates that the peak values of the cathode material at different sintering conditions have no obvious noise. Consequently, after the second carbon coating formation process and the thermal treatment, the original olivine crystalline structure of the lithium iron phosphate-based compound is not changed. That is, the stability of the crystalline phase is not influenced.

### Example 7:

In this example, a scale-up test was performed. The cathode material covered with the single carbon coating (i.e. the M product powder), which was prepared in Example 1, was further subjected to a second carbon coating formation process. In Example 2, 20g of the M product powder was mixed with 0.4g coal tar pitch/100g (0.4 %) and 1g coal tar pitch/100g (1 %). In this example (Example 7), 50g of the M product powder was mixed with 1g coal tar pitch100g and 2.5g coal tar pitch/100g. Consequently, the carbon content of Example 7 was controlled to be equal to the carbon content of Example 2. Moreover, in Example 7, the sintering procedure was performed by maintaining at 550°C for 4 hours and then maintaining at 650°C for 4 hours. The subsequent procedures are identical to those of Example 2, and are not redundantly described herein. The physical data of the powders obtained in Example 7 are shown in Table 4 as follows. As shown in Table 4, in the powder obtained by mixing 50g of the M product powder with 1g coal tar pitch/100g, the ratio of the carbon percentage of the first carbon coating to the carbon percentage of the second carbon coating is about 1:1. Moreover, in the powder obtained by mixing 50g of the M product powder with 2.5g coal tar pitch/100g, the ratio of the carbon percentage of the first carbon coating to the carbon percentage of the second carbon coating is close to 1:2.

**Table 4:**

| (mAh/g) | Single carbon coating | Double carbon coatings | |
|---|---|---|---|
| | | 50g lithium iron phosphate_ 1g coal tar pitch /100g | 50g lithium iron phosphate_ 2.5g coal tar pitch /100g |
| C% | 1.18% | 2.35% (1.17%)* | 3.42% (2.24%)* |
| S.A | 10.9 | 8.4 | 8.88 |

| | | | |
|---|---|---|---|
| * the value in the parenthesis indicates the carbon percentage of the second carbon coating | | | |

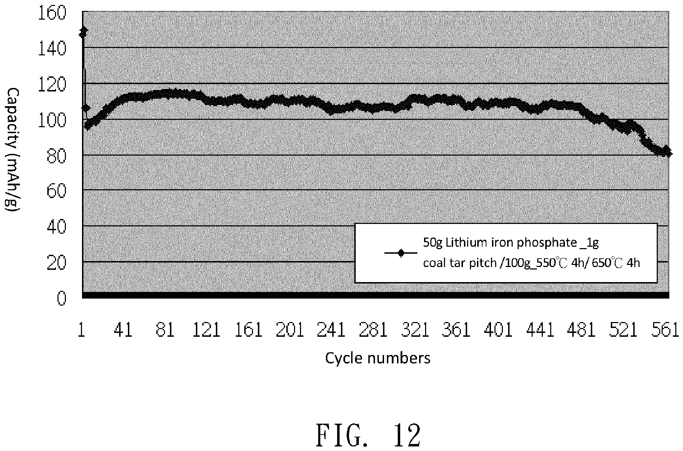

FIG. 12 schematically illustrates the capacity of the coin-type cells produced from the powder of Example 7 at a charge rate of 1C and a discharge rate of 3C. In case that the capacity as shown in FIG. 12 is converted into the life cycle retention, the powder produced by the sintering procedure of Example 6 (i.e.maintaining at 550°C for 4 hours and then maintaining at 650°C for 4 hours) subject to the scale-up test may allow the cell to have a cycle life of up to 500 charge/discharge cycles at 100% of life cycle retention. In other words, this production process has the potential of mass production and reduced fabricating cost.

From the above embodiments, it is found that the cell produced from the cathode material with the double carbon coatings has obviously longer cycle life. For example, the cell produced from the cathode material with the double carbon coatings has a cycle life of up to 500 charge/discharge cycles at 100% of life cycle retention. As known, the conventional coin-type cell has a life cycle of about 100∼200 cycles. In comparison with the conventional coin-type cell, the cycle life of the cell produced from the cathode material with the double carbon coatings has been increased at least two times. Although the capacity of the cathode material with the double carbon coatings is slightly reduced, the adjustment of the sintering temperature can restore the capacity to be close to the capacity of the cathode material with the single carbon coating. Moreover, the electrical properties and the physical properties of the cathode material with the double carbon coatings are related to the carbon content of the second carbon coating. In accordance with the optimal conditions, the satisfactory cycle life is achieved when the ratio of the carbon percentage of the first carbon coating to the carbon percentage of the second carbon coating is close to 1:1 or 1:2.

From the above descriptions, the present invention provides a cathode material with double carbon coatings. The cathode material comprises a lithium metal phosphate matrix and two carbon coatings coated on the lithium metal phosphate matrix. The carbon source of the first carbon coating is a carbohydrate or a water-soluble macromolecule compound having relatively smaller molecular weight. Consequently, the first carbon coating has a looser structure, and a space is retained in the first carbon coating for allowing expansion and contraction of the structure during the charging and discharging process. Under this circumstance, the possibility of peeling off the carbon structure will be minimized. The carbon source of the second carbon coating is a macromolecule compound having relatively higher molecular weight. In particular, the carbon source of the second carbon coating is coal tar pitch or petroleum pitch. Consequently, the second carbon coating has a denser structure in order to reduce the structural damage of the lithium metal phosphate matrix by the acidic substance of the electrolyte. By combining two types of carbon layers together to increase the adhesion of carbon on the lithium metal phosphate matrix, the problem of causing reduction of the material performance during the charging and discharging process will be avoided. Due to the double carbon coatings, the overall structural strength of the cathode material is enhanced, the influence on the structural flexibility during the charging and discharging process is reduced, and the structural damage caused by the acidic substance of the electrolyte is reduced. As a consequence, the use life of the cathode material is prolonged.

While the invention has been described in terms of what is presently considered to be the most practical and preferred embodiments, it is to be understood that the invention needs not be limited to the disclosed embodiment. On the contrary, it is intended to cover various modifications and similar arrangements included within the scope of the appended claims which are to be accorded with the broadest interpretation so as to encompass all such modifications and similar structures.

## Claims

1. A process of manufacturing a cathode material with double carbon coatings, the process comprising steps of:
providing a lithium metal phosphate matrix and a carbon source of a first carbon coating, and thermally treating the mixture of the lithium metal phosphate matrix and the carbon source of the first carbon coating by sintering, so that a cathode material with a single carbon coating is obtained, wherein the first carbon coating is coated on the lithium metal phosphate matrix;
adding a carbon source of a second carbon coating to the cathode material with the single carbon coating, and thermally treating the mixture of the carbon source of the second carbon coating and the cathode material with the single carbon coating by sintering, so that the cathode material with the double carbon coatings is obtained,
wherein the carbon source of the first carbon coating is monosaccharide, disaccharide, polysaccharide, polyvinyl alcohol or polyvinylpyrrolidone, and the carbon source of the second carbon coating is coal tar pitch or petroleum pitch.

2. The process according to claim 1, wherein the metal of the lithium metal phosphate matrix is iron, cobalt, nickel, manganese or copper.

3. The process according to claim 1, wherein the carbon source of the second carbon coating is dissolved in an organic solvent.

4. The process according to claim 3, wherein the organic solvent is xylene.

5. The process according to claim 1, wherein the mixture of the carbon source of the second carbon coating and the cathode material with the single carbon coating is thermally treated at 550°C for 4 hours and then at 750°C for 4 hours.

6. The process according to claim 1, wherein the mixture of the carbon source of the second carbon coating and the cathode material with the single carbon coating is thermally treated at 260°C for 2 hours and then at 900°C for 2 hours.

7. The process according to claim 1, wherein the mixture of the carbon source of the second carbon coating and the cathode material with the single carbon coating is thermally treated at 550°C for 4 hours and then at 650°C for 4 hours.

## Patentansprüche

1. Verfahren zur Herstellung eines Kathodenmaterials mit Doppelkohlenstoffbeschichtungen, wobei das Verfahren die folgenden Schritte umfasst:
Bereitstellen einer Lithium-Metall-Phosphat-Matrix und einer Kohlenstoffquelle einer ersten Kohlenstoff-Beschichtung, und thermisches Behandeln der Mischung aus der Lithium-Metall-Phosphat-Matrix und der Kohlenstoffquelle der ersten Kohlenstoff-Beschichtung durch Sintern, so dass ein Kathodenmaterial mit einer einzigen Kohlenstoff-Beschichtung erhalten wird, wobei die erste Kohlenstoff-Beschichtung auf die Lithium-Metall-Phosphat-Matrix aufgetragen wird;
Hinzufügen einer Kohlenstoffquelle einer zweiten Kohlenstoffbeschichtung zu dem Kathodenmaterial mit der Einzelkohlenstoffbeschichtung und thermisches Behandeln der Mischung der Kohlenstoffquelle der zweiten Kohlenstoffbeschichtung und des Kathodenmaterials mit der Einzelkohlenstoffbeschichtung durch Sintern, so dass das Kathodenmaterial mit den Doppelkohlenstoffbeschichtungen erhalten wird,
wobei die Kohlenstoffquelle der ersten Kohlenstoffbeschichtung Monosaccharid, Disaccharid, Polysaccharid, Polyvinylalkohol oder Polyvinylpyrrolidon ist und die Kohlenstoffquelle der zweiten Kohlenstoffbeschichtung Kohlenteerpech oder Petroleumpech ist.

2. Verfahren nach Anspruch 1, wobei das Metall der Lithium-Metall-Phosphat-Matrix Eisen, Kobalt, Nickel, Mangan oder Kupfer ist.

3. Verfahren nach Anspruch 1, bei dem die Kohlenstoffquelle der zweiten Kohlenstoffbeschichtung in einem organischen Lösungsmittel gelöst wird.

4. Verfahren nach Anspruch 3, wobei das organische Lösungsmittel Xylen ist.

5. Verfahren nach Anspruch 1, bei dem das Gemisch aus der Kohlenstoffquelle der zweiten Kohlenstoffschicht und dem Kathodenmaterial mit der einzelnen Kohlenstoffschicht 4 Stunden lang bei 550°C und anschließend 4 Stunden lang bei 750°C thermisch behandelt wird.

6. Verfahren nach Anspruch 1, bei dem das Gemisch aus der Kohlenstoffquelle der zweiten Kohlenstoffschicht und dem Kathodenmaterial mit der einzelnen Kohlenstoffschicht 2 Stunden lang bei 260°C und dann 2 Stunden lang bei 900°C thermisch behandelt wird.

7. Verfahren nach Anspruch 1, bei dem das Gemisch aus der Kohlenstoffquelle der zweiten Kohlenstoffschicht und dem Kathodenmaterial mit der einzelnen Kohlenstoffschicht 4 Stunden lang bei 550°C und anschließend 4 Stunden lang bei 650°C thermisch behandelt wird.

## Revendications

1. Un procédé de fabrication d'un matériau de cathode avec des revêtements à double carbone, le procédé comprenant les étapes consistant à:
fournir une matrice de phosphate de lithium métallique et une source de carbone d'un premier revêtement de carbone, et traiter thermiquement le mélange de matrice de phosphate de lithium métallique et de la source de carbone du premier revêtement de carbone par frittage, de sorte que l'on obtient un matériau de cathode avec un seul revêtement de carbone, dans lequel le premier revêtement de carbone est appliqué sur la matrice de phosphate de lithium métallique ;
ajouter une source de carbone d'un second revêtement de carbone au matériau de cathode avec le revêtement de carbone unique, et traiter thermiquement le mélange de la source de carbone du second revêtement de carbone et du matériau de cathode avec le revêtement de carbone unique par frittage, de sorte que l'on obtient le matériau de cathode avec un double revêtements de carbone, dans lequel la source de carbone du premier revêtement de carbone est un monosaccharide, un disaccharide ou un polysaccharide, un alcool polyvinylique ou de la polyvinylpyrrolidone, et la source de carbone du second revêtement de carbone est un brai de goudron de houille ou un brai de pétrole.

2. Le procédé selon la revendication 1, dans lequel le métal de la matrice de phosphate de lithium métallique est du fer, du cobalt, du nickel, du manganèse ou du cuivre.

3. Le procédé selon la revendication 1, dans lequel la source de carbone du second revêtement de carbone est dissoute dans un solvant organique.

4. Le procédé selon la revendication 3, dans lequel le solvant organique est du xylène.

5. Le procédé selon la revendication 1, dans lequel le mélange de la source de carbone du second revêtement de carbone et du matériau de carbone avec l'unique revêtement de carbone est traité thermiquement à 550 ° C pendant 4 heures puis à 750°C pendant 4 heures.

6. Le procédé selon la revendication 1, dans lequel le mélange de la source de carbone du second revêtement de carbone et du matériau de carbone avec l'unique revêtement de carbone est traité thermiquement à 260 ° C pendant 2 heures puis à 900°C pendant 2 heures.

7. Le procédé selon la revendication 1, dans lequel le mélange de la source de carbone du second revêtement de carbone et du matériau de carbone avec l'unique revêtement de carbone est traité thermiquement à 550 ° C pendant 4 heures puis à 650°C pendant 4 heures.
